(19) Europäisches Patentamt / European Patent Office / Office européen des brevets

(11) **EP 3 076 370 B1**

(12) **EUROPEAN PATENT SPECIFICATION**

(45) Date of publication and mention of the grant of the patent:
**19.07.2017 Bulletin 2017/29**

(51) Int Cl.:
**G06T 7/00** *(2017.01)*  **G06T 7/593** *(2017.01)*

(21) Application number: **16162561.1**

(22) Date of filing: **29.03.2016**

(54) **METHOD AND SYSTEM FOR SELECTING OPTIMUM VALUES FOR PARAMETER SET FOR DISPARITY CALCULATION**

VERFAHREN UND SYSTEM ZUR AUSWAHL OPTIMALER WERTE FÜR EINEN PARAMETERSATZ ZUR DISPARITÄTSBERECHNUNG

PROCÉDÉ ET SYSTÈME POUR SÉLECTIONNER DES VALEURS OPTIMALES POUR ENSEMBLE DE PARAMÈTRES DE CALCUL DE DISPARITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.04.2015 CN 201510156232**

(43) Date of publication of application:
**05.10.2016 Bulletin 2016/40**

(73) Proprietor: **Ricoh Company, Ltd.**
**Tokyo 143-8555 (JP)**

(72) Inventors:
• **LIU, Zhenhua**
  **Haidian District, Beijing 100044 (CN)**
• **LIU, Dianchao**
  **Haidian District, Beijing 100044 (CN)**
• **LIU, Yuan**
  **Haidian District, Beijing 100044 (CN)**
• **SHI, Zhongchao**
  **Haidian District, Beijing 100044 (CN)**
• **LU, Yaojie**
  **Haidian District, Beijing 100044 (CN)**

(74) Representative: **Watkin, Timothy Lawrence Harvey**
**Marks & Clerk LLP**
**Fletcher House**
**The Oxford Science Park**
**Heatley Road**
**Oxford OX4 4GE (GB)**

• **KORDELAS GEORGIOS A ET AL: "Enhanced disparity estimation in stereo images", IMAGE AND VISION COMPUTING, vol. 35, 6 January 2015 (2015-01-06), pages 31-49, XP029201506, ISSN: 0262-8856, DOI: 10.1016/J.IMAVIS.2014.12.001**
• **DONG ZHANG ET AL: "A New Profile Shape Matching Stereovision Algorithm for Real-time Human Pose and Hand Gesture Recognition", INTERNATIONAL JOURNAL OF ADVANCED ROBOTIC SYSTEMS, 1 January 2014 (2014-01-01), page 1, XP055294416, AT ISSN: 1729-8806, DOI: 10.5772/57515**
• **SCHARSTEIN D ET AL: "A taxonomy and evaluation of dense two-frame stereo correspondence algorithms", STEREO AND MULTI-BASELINE VISION, 2001. (SMBV 2001). PROCEEDINGS. IEEE WORKSHOP ON KAUAI, HI, USA 9-10 DEC. 2001, LOS ALAMITOS, CA, USA,IEEE COMPUT. SOC, US, 9 December 2001 (2001-12-09), pages 131-140, XP010582733, DOI: 10.1109/SMBV.2001.988771 ISBN: 978-0-7695-1327-0**
• **C. BANZ ET AL: "EVALUATION OF PENALTY FUNCTIONS FOR SEMI-GLOBAL MATCHING COST AGGREGATION", ISPRS - INTERNATIONAL ARCHIVES OF THE PHOTOGRAMMETRY, REMOTE SENSING AND SPATIAL INFORMATION SCIENCES, vol. XXXIX-B3, 25 August 2012 (2012-08-25) , pages 1-6, XP055205189, DOI: 10.5194/isprsarchives-XXXIX-B3-1-2012**

(56) References cited:

- **MICHAEL MATTHIAS ET AL: "Real-time stereo vision: Optimizing Semi-Global Matching", 2013 IEEE INTELLIGENT VEHICLES SYMPOSIUM (IV), IEEE, 23 June 2013 (2013-06-23), pages 1197-1202, XP032501967, ISSN: 1931-0587, DOI: 10.1109/IVS.2013.6629629 [retrieved on 2013-10-10]**

**Description**

BACKGROUND OF THE INVENTION

1. Field of the Invention

The present invention relates to the field of solid images (three-dimensional images), more particularly relates to a method and a system for selecting an optimum value for each parameter of a predetermined parameter set for disparity calculation.

2. Description of the Related Art

Disparity calculation, which is the basic principle of stereo matching, is conducting comparison with respect to images (e.g., left and right images) captured by photographing a same object under two or more different angles of view to seek corresponding pixels in the images and to calculate the positional offsets between the corresponding pixels, so as to obtain a disparity map.

In general, the conventional well-used disparity calculation or stereo matching algorithms are divided into three classes, namely, local matching, global matching, and semi-global matching. The local matching algorithms (e.g., a block matching algorithm (see D. Scharstein & R. Szeliski, "A taxonomy and evaluation of dense two-frame stereo correspondence algorithm", International Journal of Computer Vision (IJVC) 47 (1-3), 7-42, 2002)) have high efficiency, but their effect is not good. The global matching algorithms (e.g., a dynamic programming algorithm (see A. F. Bobick & S. S. Intille, "Large Occlusion Stereo", International Journal of Computer Vision (IJVC) 33 (3), 181-200, 1999)) have good effect, but their efficiency is not good. The semi-global matching algorithms (e.g., a semi-global matching (SGM) algorithm (see H. Hirschmuller, "Accurate and Efficient Stereo Processing by Semi-global matching and Mutual Information", In: Proc. IEEE Int. Conf., Computer Vision Pattern Recognition (CVPR), 2, 807-814 (2005))) have relatively high efficiency and relatively good effect, and are actually often utilized.

These kinds of algorithms have a commonly existing problem that is lacking adaptivity. That is, in some scenarios, they may have a good effect, but in other scenarios, their effect may not be good. In addition, all the algorithms need to carry out parameter optimization. By conducting parameter adjustment, they may have this kind of adaptivity. However, manual parameter adjustment needs to put a lot of energy, so it is unpractical. Strategies for automatically selecting parameters for stereo matching are presented in Kordelas et al., "Enhanced Disparity Estimation in Stereo Images", Image and Vision Computing, Vol. 35, p. 31-49, 2015, as well as in Zhang et al., "A New Profile Shape Matching Stereovision Algorithm for Real-Time Human Pose and Hand Gesture Recognition", International Journal of Advanced Robotic Systems, Vol. 11(2), p. 1-12, 2014. Also, in the conventional techniques, some stereo matching methods have been proposed up to now.

For example, in U.S. Patent No. 8,098,276 B2, a stereo vision system and a control method thereof are proposed in which by carrying out control and correction with respect to the brightness of left and right images, the accuracy of stereo matching is enhanced. The core part therein is called a "matching result measuring unit" which calculates a matching degree by conducting high efficiency signal extraction with respect to a disparity map and feeds the matching degree back to an image correction unit to correct the left and right images so as to calculate the matching degree repeatedly. In this way, it is possible to acquire a disparity map which has adaptivity to environmental changes and high accuracy. However, in this patent, only image-level information is considered, so the whole depth image based effect in some scenarios may not be ideal.

Again, for example, in a paper whose title is "Learning to Detect Ground Control Points for Improving the Accuracy of Stereo Matching" (CVPR, 2014 IEEE Conference), a supervised learning method for predicting the correctness of stereo matches based on a random forest and a set of features that capture various forms of information about each pixel is proposed. In this method, a model is generated according to learning, and is used to predict the correctness of pixel matching. In this way, it is possible to obtain reliable disparity values so as to improve the accuracy of stereo matching. However, in this paper, only pixel-level information is considered, so the whole disparity map based effect may not be ideal.

SUMMARY OF THE INVENTION

The present invention is proposed in the light of the above problems in the conventional techniques. The objective of the present invention is to provide a method and system for selecting an optimum value for each parameter of a predetermined parameter set for disparity calculation, by which it is possible to adaptively obtain a good disparity calculation effect under different scenarios.

According to a first aspect of the present invention, a method of selecting an optimum value for each parameter of a parameter set for disparity calculation is provided. The method includes:

an obtainment step of obtaining a pair of training images and a first disparity map corresponding to the pair of training images;

a definition step of defining an initial parameter value range for each parameter in the parameter set so as to make up an initial parameter value range combination;

a generation step of generating, by dividing the initial parameter value range of each parameter in the initial parameter value range combination, plural parameter value combinations of the parameter set;

a calculation step of, regarding each of the plural parameter value combinations, obtaining a second disparity map by conducting disparity calculation with respect to the pair of training images by using the corresponding parameter value combination;

a determination step of, regarding each of the plural parameter value combinations, determining a first approaching degree and a second approaching degree between the corresponding second disparity map and the first disparity map; and

a selection step of selecting a preferred parameter value range combination for the parameter set, corresponding to the pair of training images.

The selection step includes carrying out, based on the first approaching degrees and the second approaching degrees, a grouping process with respect to the parameter value combinations of the parameter set so as to obtain the preferred parameter value range combination for the parameter set, so that the changes of the first approaching degrees determined based on the parameter value combinations within the preferred parameter value range combination are less than a first predetermined threshold; the changes of the second approaching degrees determined based on the parameter value combinations within the preferred parameter value range combination are less than a second predetermined threshold; and a third approaching degree related to the first approaching degrees determined based on the parameter value combinations within the preferred parameter value range combination is greater than a third predetermined threshold.

According to a second aspect of the present invention, a system for selecting an optimum value for each parameter of a parameter set for disparity calculation is provided. The system includes:

an obtainment device configured to obtain a pair of training images and a first disparity map corresponding to the pair of training images;

a definition device configured to define an initial parameter value range for each parameter in the parameter set so as to make up an initial parameter value range combination;

a generation device configured to generate, by dividing the initial parameter value range of each parameter in the initial parameter value range combination, plural parameter value combinations of the parameter set;

a calculation device configured to, regarding each of the plural parameter value combinations, obtain a second disparity map by conducting disparity calculation with respect to the pair of training images by using the corresponding parameter value combination;

a determination device configured to, regarding each of the plural parameter value combinations, determine a first approaching degree and a second approaching degree between the corresponding second disparity map and the first disparity map; and

a selection device configured to select a preferred parameter value range combination for the parameter set, corresponding to the pair of training images.

The selection device is configured to conduct a step of carrying out, based on the first approaching degrees and the second approaching degrees, a grouping process with respect to the parameter value combinations of the parameter set so as to obtain the preferred parameter value range combination for the parameter set, so that the changes of the first approaching degrees determined based on the parameter value combinations within the preferred parameter value range combination are less than a first predetermined threshold; the changes of the second approaching degrees determined based on the parameter value combinations within the preferred parameter value range combination are less than a second predetermined threshold; and a third approaching degree related to the first approaching degrees determined based on the parameter value combinations within the preferred parameter value range combination is greater than a third predetermined threshold.

As a result, the proposed technique in the present invention is a kind of one based on learning. In a case where a disparity calculation algorithm is given, this kind of technique may extract multi-level information from plural pairs of training images in various scenarios, which includes at least global information and optional local information of each pair of training images, may optionally take account of the information of the majority of the training images, and may optionally conduct iterative computation, so that it is possible to select optimum parameters for the given disparity calculation algorithm so as to get an optimum disparity calculation algorithm. As a result, this kind of technique is more adaptive, and the disparity map obtained by utilizing the optimum disparity calculation algorithm may be more accurate.

This kind of technique may be applied to, for example, a robot, a monitoring system, or an intelligent car. The disparity information (i.e., depth information) obtained according to this kind of technique may be used to estimate the relative distance between the related camera and an object in the related scene. For example, in a case of an intelligent car, based on a robust disparity map, it is possible to easily detect a road surface, a white dividing line, or a fence therein, so that it is possible to detect a target, and to further conduct target classification (here the target mainly refers to a pedestrian or another vehicle); as a result, the driving conditions of the intelligent car may be comprehensively grasped.

## BRIEF DESCRIPTION OF THE DRAWINGS

FIG. 1 is a functional block diagram related to an application in which the embodiments of the present invention may be applied;
FIG. 2 is a hardware block diagram related to the application in which the embodiments of the present invention may be applied;
FIG. 3 is a flowchart of a method of selecting an optimum value for each parameter of a parameter set for disparity calculation, according to an embodiment of the present invention;
FIG. 4A illustrates an example of a reference image for training;
FIG. 4B illustrate an example of a real disparity map corresponding to a pair of training images including the reference image for training in FIG. 4A;
FIG. 5 illustrates an example of calculating a whole image based approaching degree (e.g., a correct rate) on the grounds of comparison of a real disparity map and a calculated disparity map;
FIG. 6 illustrates local smoothness related to a whole image based approaching degree such as a correct rate;
FIG. 7 illustrates a pixel distribution based approaching degree (e.g., an error pixel mask image);
FIG. 8 illustrates local smoothness related to a pixel distribution based approaching degree such as an error pixel mask image;
FIG. 9 illustrates a result obtained by carrying out grouping with respect to parameter value combinations;
FIG. 10 illustrates a result obtained by carrying out voting based on majority rule with respect to pairs of training images; and
FIG. 11 is a block diagram of a system for selecting an optimum value for each parameter of a parameter set for disparity calculation, according to an embodiment of the present invention.

## DETAILED DESCRIPTION OF THE PREFERRED EMBODIMENTS

In order to let those people skilled in the art better understand the present invention, hereinafter, the embodiments of the present invention will be concretely described with reference to the drawings. However, it should be noted that the same symbols, which are in the specification and the drawings, stand for constructional elements having basically the same function and structure, and repeated explanations for the constructional elements are omitted.

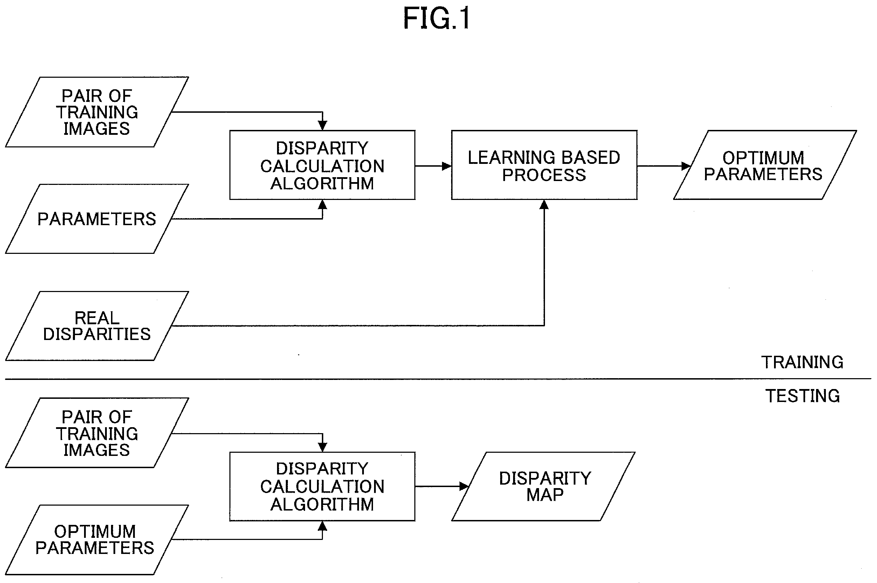

FIG. 1 is a functional block diagram related to an application (i.e., disparity calculation) in which the embodiments of the present invention may be applied.

As shown in FIG. 1, the disparity calculation process includes two parts, namely, training and testing.

In the training stage, reference and target images for training (also called a "pair of training images" for short), real disparity values (or a real disparity map), and parameters of a disparity calculation algorithm serve as input. And then, by carrying out the disparity calculation algorithm and a learning based process according to the embodiments of the present invention, it is possible to output optimum parameters.

In the testing stage, reference and target images for testing (also called a "pair of testing images" for short) as well as the optimum parameters obtained in the training stage serve as input. And then, by conducting the disparity calculation algorithm using the optimum parameters and the pair of testing images, it is possible to output a disparity map corresponding to the pair of testing images.

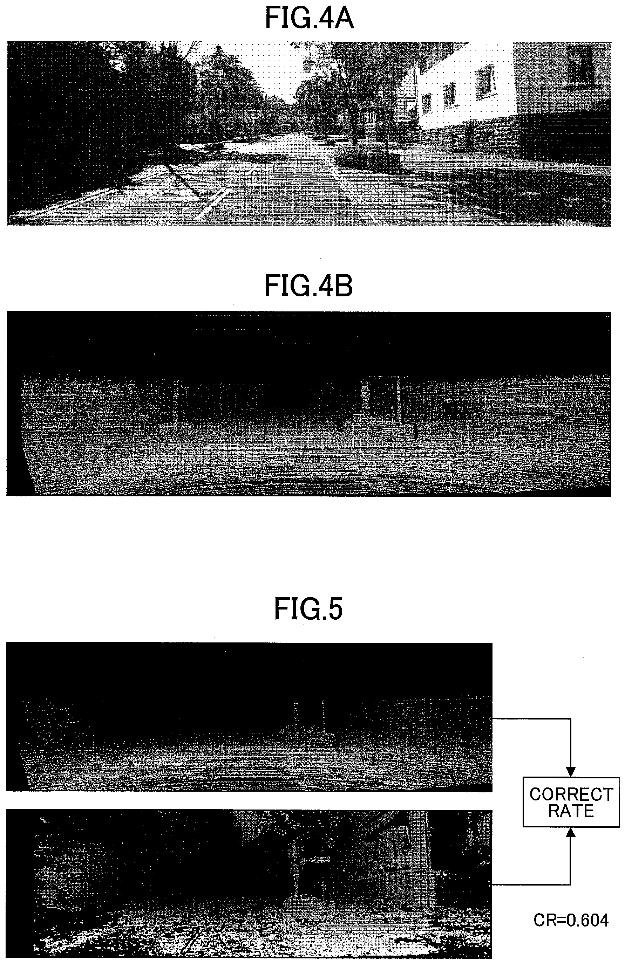

Here the reference image and the target image for training or testing may be captured by a stereo camera such as a two-lens camera. For example, a left image captured by the left camera in the two-lens camera may serve as the reference image, or a right image captured by the right camera in the two-lens camera may serve as the reference image. After selecting the reference image, the other image may serve as the target image. Each image has real disparity information, for example, as shown in FIG. 4A.

In addition, it should be noted that in the training and testing stages, the disparity calculation algorithm may be known, and is unchanged. The description about the disparity calculation algorithm is omitted because the technique according to the embodiments of the present invention may be applied in any disparity calculation algorithm related to one or more parameters waiting for determination.

For example, the following equation (1) is the function of a disparity calculation algorithm needing to be optimized, among the global matching algorithms described in the background of the present invention. In the following equation (1), $P_1$ and $P_2$ are parameters waiting for adjustment.

$$E(D) = E_{data}(D) + E_{smooth}(D)$$
$$E_{smooth}(D) = \sum\nolimits_{<p,q> \in N} s(p,q) \qquad (1)$$
$$s(p,q) = \begin{cases} 0 & if \quad dp = dq \\ P_1 & if \ |dp - dq| = 1 \\ P_2 & if \ |dp - dq| > 1 \end{cases}$$

Here it should be noted that the embodiments of the present invention may be applied to the learning based process in the training stage shown in FIG. 1, for example. In this way, it is possible to get an optimum value for each parameter waiting for determination in the disparity calculation algorithm.

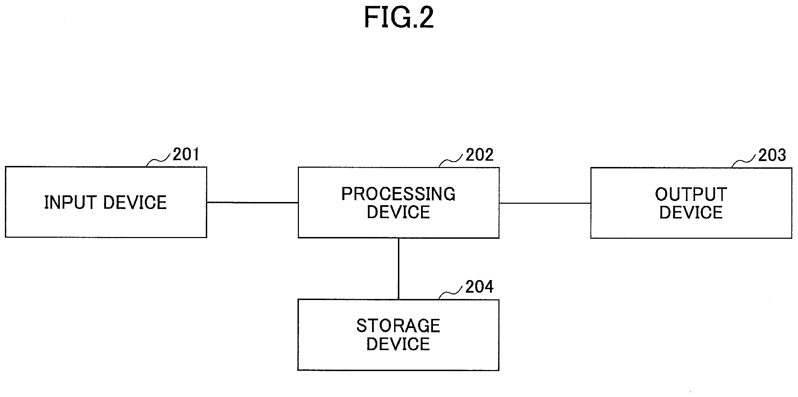

FIG. 2 is a hardware block diagram related to the application in which the embodiments of the present invention may be applied.

As shown in FIG. 2, the hardware related to the application includes an input device 201, a processor 202, an output device 203, and a storage device 204.

The processor 202 is connected to the input device 201, the output device 203, and the storage device 204.

The input device 201 includes a stereo camera such as a two-lens camera, a decoder, etc. The two-lens camera may photograph a scene to obtain left and right images so as to serve as the reference and target images for training or testing.

The storage device 204 may store input data (e.g., a real disparity map) that the processor 202 needs as well as intermediate data that the processor 202 generates.

In a case where the input device 201 inputs a pair of training images, a method according to an embodiment of the present invention may be executed by the processor 202. In this case, the output device 203 may output the obtained optimum value of each parameter of the parameter set as an output result.

In a case where the input device 201 inputs a testing image, if a method according to an embodiment of the present invention has been executed by the processor 202 and the obtained optimum value of each parameter of the parameter set has been stored in the storage device 204, then the output device 203 may directly output a disparity map as an output result.

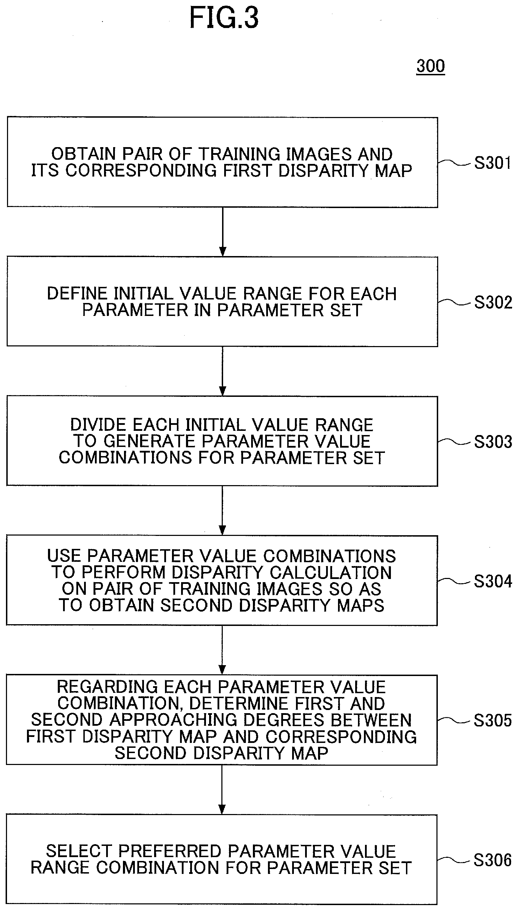

FIG. 3 is a flowchart of a method of selecting an optimum value for each parameter of a parameter set for disparity calculation, according to an embodiment of the present invention.

As shown in FIG. 3, the method includes STEPS S301 to S306.

In STEP S301, a pair of training images and a real disparity map (also called a "first disparity map") corresponding to the pair of training images are acquired.

In STEP S302, an initial parameter value range is defined for each parameter of a parameter set, so as to obtain an initial parameter value range combination of the parameter set.

In STEP S303, by dividing the initial parameter value range of each parameter in the initial parameter value range combination, parameter value combinations are generated.

In STEP S304, each parameter value combination is used to conduct disparity calculation with respect to the pair of training images so as to obtain a calculated disparity map (also called a "second disparity map").

In STEP S305, regarding each parameter value combination, a whole image based approaching degree (also called a "first approaching degree") and a pixel distribution based approaching degrees (also called a "second approaching degree") between the corresponding second disparity map and the first disparity map are determined.

In STEP S306, a preferred parameter value range combination corresponding to the pair of training images is selected for the parameter set.

Here STEP S306 includes conducting grouping (i.e., a kind of division) with respect to the parameter value combinations of the parameter set on the grounds of the first approaching degrees and the second approaching degrees so as to obtain the preferred parameter value range combination, so that changes of the first approaching degrees determined based on the parameter value combinations within the preferred parameter value range combination are less than a first predetermined threshold; changes of the second approaching degrees determined based on the parameter value combinations within the preferred parameter value range combination are less than a second predetermined threshold; and an additional whole image based approaching degree (also called a "third approaching degree") of the first approaching degrees determined based on the parameter value combinations within the preferred parameter value range combination is greater than a third predetermined threshold.

Here it should be noted that there may also exist plural pairs of training images in other cases.

In what follows, the respective steps shown in FIG. 3 will be depicted in detail.

In STEP S301 of FIG. 3, a pair of training images including reference and target images for training may be captured by a stereo camera such as a two-lens camera. It is possible to select a left image captured by the left camera in the two-lens camera as the reference image, or to select a right image captured by the right camera in the two-lens camera as the reference image. After selecting the reference image, the other image may serve as the target image. Each image for training may have real disparity information, as shown in FIG. 4A, for example. Moreover, in this step, an existing real disparity map (i.e., a first disparity map) corresponding to the pair of training images is also input.

FIG. 4A illustrates an example of a reference image for training.

FIG. 4B illustrate an example of a real disparity map (i.e., a first disparity map) corresponding to a pair of training images including the reference image for training in FIG. 4A.

Here it should be noted that the method according to this embodiment is not limited to a specific disparity calculation algorithm; in other words, it may be applied in any disparity calculation algorithm whose parameters need to be optimized.

In STEP S302 of FIG. 3, for example, regarding a given disparity calculation algorithm which has plural parameters (e.g., a parameter set including two parameters p1 and p2) needing to be optimized, it is possible to define the initial value range for each parameter so as to obtain an initial value range combination ([1,N1],[1,N2]) as shown in the following Table 1.

Table 1

| Parameter | p1 | p2 |
|---|---|---|
| Initial Value Range | [1,N1] | [1,N2] |

In STEP S303 of FIG. 3, by dividing the initial value range of each parameter, plural parameter value combinations are generated. The following Table 2 illustrates the parameter value combinations obtained by conducting division with respect to the initial value ranges in Table 1, for example. Here, n=(N1/S1)*(N2/S2) in which S1 and S2 are search steps of the parameters p1 and p2, respectively.

In STEP S304 of FIG. 3, regarding each parameter value combination, it is used to calculate a disparity map so as to obtain a calculated disparity map (i.e., a second disparity map). In particular, on the basis of the given disparity calculation algorithm and the pair of training images, by utilizing each parameter value combination, it is possible to acquire a corresponding second disparity map. That is, if the number of the parameter value combinations is n, then it is possible to obtain n second disparity maps.

Table 2

| Parameter Value Combination | Parameter | |
|---|---|---|
| | p1 | p2 |
| PC1 | 1 | 1 |
| PC2 | 1 | 1+S2 |
| ... | ... | ... |
| ... | 1 | N2 |
| ... | 1+S1 | 1 |
| ... | ... | ... |
| PCn | N1 | N2 |

In STEP S305 of FIG. 3, for example, regarding each of n parameter value combinations, n first approaching degrees (i.e., n whole image based approaching degrees) between n second disparity maps and the first disparity map are determined. That is, there is a first approaching degree between each second disparity map and the first disparity map. The first approaching degree may be used for wholly (or globally) evaluating the approaching degree (i.e., the degree of difference) between each second disparity map and the first disparity map. In other words, by utilizing each first approaching degree, it is possible to investigate in whole whether the disparity values of all pixels in the corresponding second disparity maps approach the disparity values of all pixels in the first disparity map.

An example of the first approaching degree between each second disparity map and the first disparity map may include but is not limited to a ratio of the number of pixels, whose disparity values are the same (or whose differences are very small, or which match each other) in the corresponding disparity map and the first disparity map, to the number of all pixels in the corresponding second disparity map or the first disparity map; or a ratio of the number of pixels, whose disparity values are the same (or whose differences are very small, or which match each other) in the corresponding second disparity map and the first disparity map, to the number of valid pixels (whose disparity values are greater than zero) in the corresponding second disparity map. Of course, those people skilled in the art may also conceive any other proper example related to the first approaching degree in the light of the same principle.

As a result, it is understood that the higher the first approaching degree between each second disparity map and the first disparity map is (or the smaller the degree of difference between the two is), the more preferable the corresponding parameter value combination is.

In an example, each first approaching degree may be expressed by a correct rate (CR) which may be related to the total number of pixels in the corresponding second disparity map, whose disparity values approach the disparity values of the corresponding pixels in the first disparity map. Here, whether the disparity value of a pixel in the corresponding second disparity map approaches the disparity value of the corresponding pixel in the first disparity map may be determined on the grounds of the difference between the two disparity values; for example, if the difference between the two disparity values is less than a predetermined threshold $\varepsilon$, then it may be said that the two disparity values approach each other.

In an example, the correct rate CR may be expressed by the following equation (2).

$$N_g = \left\| \{ (x, y) : (x, y) \in R, d_g(x, y) > 0 \} \right\|$$

$$N_c = \left\| \{ (x, y) : (x, y) \in R, d_g(x, y) > 0, d_c(x, y) > 0, | d_g(x, y) - d_c(x, y) | < \varepsilon \} \right\| \qquad (2)$$

$$CR = \frac{N_c}{N_g}$$

Here, R refers to a pair of training images; (x,y) stands for the coordinates of each pixel in the pair of training images; $d_g$ is the disparity value of the pixel at (x,y) in the first disparity map; $d_c$ represents the disparity value of the pixel at (x,y) in the corresponding second disparity map; $\varepsilon$ denotes a predetermined threshold; Ng is the total number of pixels in any one image consisting of the pair of training images; $N_c$ is the number of pixels, whose disparity values are greater than 0 and whose absolute differences are less than $\varepsilon$, in the first disparity map and the corresponding second disparity map. The larger the correct rate CR is, the higher the corresponding first approaching degree is.

Of course, those people skilled in the art may also conceive any other proper means for evaluating the first approaching degrees. For example, it is also possible to use only $N_c$ in the equation (2) to conduct evaluation with respect to the first approaching degrees.

FIG. 5 illustrates an example of calculating a first approaching degree (e.g., a correct rate) on the grounds of comparison of the first disparity map and a second disparity map.

For example, as shown in FIG. 5, regarding the first disparity map and the second disparity map corresponding to a parameter value combination PCi, it is assumed that the calculated correct rate CR is 0.604 which represents a ratio of the number of pixels, whose disparity values in the two disparity maps are greater than zero and meet the following condition, to the number of pixels in the first disparity map, whose disparity values are greater than zero. The condition is that the absolute difference between the disparity value (greater than zero) of a pixel in the second disparity map and the disparity value (greater than zero) of the corresponding pixel in the real disparity map is less than a predetermined threshold $\varepsilon$. That is, the calculated correct rate CR is used for evaluating in whole (i.e., on the basis of the total number of pixels) the approaching degree between the first and second disparity maps.

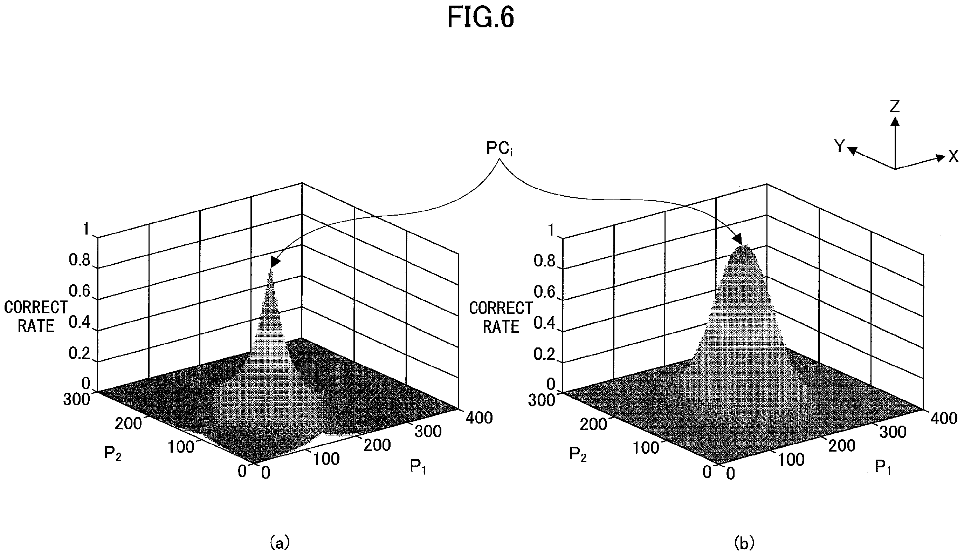

FIG. 6 illustrates local smoothness related to a first approaching degree such as a correct rate.

Here it should be noted that if a correct rate has local smoothness, that means that the parameter value combination corresponding to the correct rate has stability. In other words, although the value of each parameter in the parameter value combination changes in a small range, the effect of the calculated disparity map may not receive a big influence.

For example, if a parameter value combination PCi is preferred, then its corresponding correct rate CR should not have a dramatic descent from itself to the correct rate CR calculated on the basis of the parameter value combination adjacent to the parameter value combination PCi.

As shown in FIG. 6, images (a) and (b) are included for showing the local smoothness of two correct rates CR obtained based on a parameter value combination PCi including two parameters p1 and p2, respectively. In each of the images (a) and (b), the X and Y axes represent the values of p1 and p2, respectively, and the Z axis represents the value of the correct rate CR calculated according to the values of p1 and p2.

For example, in the image (a) of FIG. 6, there is a dramatic descent from a relatively high point (i.e., a relatively high correct rate CR) to its neighboring point on the three-dimensional surface, i.e., the change from the relatively high correct rate CR to its neighboring correct rate CR is relatively large. That means the relatively high point on the three-dimensional surface does not have local smoothness; as such, the corresponding parameter value combination should not serve as a preferred one.

On the other hand, in the image (b) of FIG. 6, there is not a dramatic descent from a relatively high point to its neighboring point on the three-dimensional surface. That is, the change from the relatively high correct rate to its neighboring correct rate is relatively small. That means the relatively high point on the three-dimensional surface (i.e., the relatively high correct rate) has local smoothness; as such the parameter value combination corresponding to the relatively high point on the three-dimensional surface has stability, i.e., may serve as a preferred one.

As a result, in STEP S306 of FIG. 3, the preferred parameter value range combination of the parameter set corresponding to the pair of training images is selected.

In particular, this step includes conducting a grouping process (i.e., a kind of division process) with respect to the parameter value combinations (also called a "parameter space") of the parameter set on the basis of the first and second approaching degrees (also called a "first and second features") so as to obtain the preferred parameter value range combination, so that the changes of the first approaching degrees determined based on the parameter value combinations within the preferred parameter value range combination are less than a first predetermined threshold; the changes of the second approaching degrees determined based on the parameter value combinations within the preferred parameter value range combination are less than a second predetermined threshold; and an additional whole image based approaching degree (i.e., the third approaching degree) of the first approaching degrees determined based on the parameter value combinations within the preferred parameter value range combination is greater than a third predetermined threshold. In this way, it is possible to ensure that the first and second approaching degrees have local smoothness within the preferred parameter value range combination.

Here it should be noted that by adding the condition that the third approaching degree (e.g., a third correct CR which may be calculated in the same way) is greater than the third predetermined threshold $\theta$, it is possible to further guarantee that the correct rate corresponding to a class for voting within the preferred parameter value range combination is relatively high. As such, it is possible to further ensure the accuracy of the preferred parameter value range combination. More information about this will be described in detail below.

In an example, in STEP S306 of FIG. 3, the change of two first approaching degrees determined based on two parameter value combinations within the preferred parameter value range combination may be expressed by the difference between their corresponding correct rates. The smaller the difference is, the smaller the change is. That is, in order to evaluate the change of the two first approaching degrees, the difference of their corresponding correct rates may be directly adopted. Of course, this is just an example. Those people skilled in the art may also adopt any other proper means for evaluating the change of two first approaching degrees. For example, it is possible to evaluate the change of the two first approaching degrees by utilizing the absolute value or the square of the difference of their corresponding correct rates.

As a result, by considering whether the first approaching degree between each second disparity map and the first disparity map is relatively large and whether the changes of the first approaching degrees are smooth (i.e., have local smoothness), it is possible to select one or more parameter value combinations corresponding to one or more first approaching degrees having local smoothness so as to make up the preferred parameter value range combination, so that it is possible to get an optimum parameter value combination from the preferred parameter value range combination. As such, by substituting the optimum parameter value combination for the given disparity calculation algorithm so as to acquire an optimum disparity calculation algorithm, it is possible to utilize the optimum disparity calculation algorithm to carry out disparity calculation with respect to reference and target images (e.g., left and right images) captured by a two-lens camera so as to obtain a more accurate disparity map.

Here it should be noted that the first approaching degrees are just used to evaluate in whole whether the second disparity maps are close to the first disparity map. Aside from this, if the second approaching degrees are used to consider, on the basis of pixel distribution, whether the second disparity maps are close to the first disparity map, then it is possible to more accurately obtain the preferred parameter value combination.

In an example, the second approaching degree between each second disparity map and the first disparity map may be represented by an error pixel mask (EPM) image. By using the EPM image, it is possible to indicate whether the disparity value at each pixel in the corresponding second disparity map does not approach the disparity value at the corresponding pixel in the first disparity map.

In an example, the EPM image may be expressed by the following equation (3).

$$EPM(x,y) = \begin{cases} 255 & if & d_g(x,y) > 0, d_c(x,y) = 0 \\ 255 & if \ d_g(x,y) > 0, d_c(x,y) > 0, |d_g(x,y) - d_c(x,y)| \geq \varepsilon & (3) \\ 0 & else \end{cases}$$

Here, x and y are the horizontal and vertical coordinates of each pixel in a pair of training images; dg refers to the disparity value of the pixel at (x,y) in the first disparity map; $d_c$ stands for the disparity value at (x,y) in the corresponding second disparity map; $\varepsilon$ denotes a predetermined threshold; and EPM(x,y) represents the error pixel mask at (x,y) in the EPM image.

That is, regarding each pixel in the EPM image, if the disparity value in the first disparity map is greater than zero, and the disparity value in the corresponding second disparity map is equal to zero, then the corresponding pixel in the EPM is marked as white (i.e., the gray level is set to 255); if the disparity values in the first disparity map and the corresponding second disparity map are greater than zero, and the absolute value of the difference between the disparity values in the first disparity map and the corresponding second disparity map is less than $\varepsilon$, then the corresponding pixel in the EPM image is marked as white (i.e., the gray level is set to 255); otherwise, the corresponding pixel in the EPM image is marked as black (i.e., the gray level is set to 0).

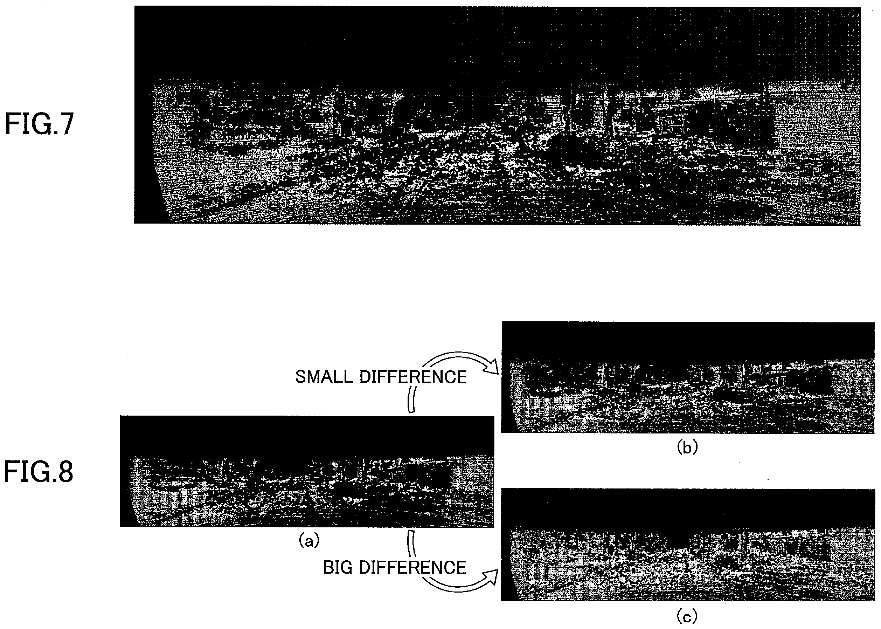

FIG. 7 illustrates a second approaching degree (e.g., an error pixel mask image).

According to FIG. 7, regarding each pixel therein, it is possible to know whether its disparity values in the first disparity map and the corresponding second disparity map are close to each other. That is, each white pixel therein represents one whose disparity values in the two disparity maps are not close to each other (i.e., the disparity value in the corresponding second disparity map is zero; or the disparity values in the two disparity maps are greater than zero, and the absolute value of the difference between the disparity values in the two disparity maps is greater than or equal to $\varepsilon$), and each black pixel therein refers to one whose disparity values in the two disparity maps are close to each other.

Moreover, in the same way, if a parameter value combination PCi is preferred, then the error pixel masks in the EPM image obtained based on the parameter value combination PCi should be close to the error pixel masks in the EPM image obtained based on the parameter value combination adjacent to the parameter value combination PCi.

FIG. 8 illustrates local smoothness related to a second approaching degree such as an error pixel mask image.

As shown in FIG. 8, there are three error pixel mask images (a), (b), and (c). The difference between the error pixel mask images (a) and (b) is relatively small, and the difference between the error pixel mask images (a) and (c) is relatively large. The error pixel mask image (a) is calculated on the grounds of a parameter value combination, and the error pixel mask images (b) and (c) are calculated on the basis of two different parameter value combinations close to the parameter value combination for calculating the error pixel mask image (a).

From FIG. 8, it is obvious that the parameter value combination corresponding to the error pixel mask image (a) which has a relatively small difference with the error pixel mask image (b) should be preferred.

As a result, in STEP S306 of FIG. 3, by considering both the local smoothness of the first approaching degrees (e.g., correct rates) and the local smoothness of the second approaching degrees (e.g., error pixel mask images) to carry out grouping with respect to the parameter space of the parameter set, it is possible to obtain a preferred parameter value range combination, so that each of the first approaching degrees calculated based on the parameter value combinations within the preferred parameter value range combination has a relatively large value; and the changes of the first approaching degrees calculated based on the parameter value combinations within the preferred parameter value range combination and the changes of the second approaching degrees calculated based on the parameter value combinations within the preferred parameter value range combination are less than the first and second predetermined thresholds, respectively.

In particular, as shown in the following Table 3, regarding each pair of training images j (if there is only one pair of training images, then j=1), a feature combination (CR$_{j,i}$,EPM$_{j,i}$) is made up by calculating the correct rate CR and the error pixel mask (EPM) image on the grounds of each parameter value combination PC$_i$.

Table 3

| | Pair of Training Images | | | | |
|---|---|---|---|---|---|
| | 1 | 2 | ... | j | m |
| PC1 | (CR$_{1,1}$,EPM$_1$ | ... | ... | ... | ... |
| PC2 | ... | ... | ... | ... | ... |
| ... | ... | ... | ... | ... | ... |
| PCi | ... | ... | ... | (CR$_{j,i}$,EPM$_j$ | ... |

(continued)

| | Pair of Training Images | | | | |
|---|---|---|---|---|---|
| | 1 | 2 | ... | j | m |
| ... | ... | ... | ... | ... | ... |
| PCn | ... | ... | ... | ... | $(CR_{m,n}, EPM_m)$ |

After that, a grouping process (a kind of division process) is conducted with respect to the parameter space (i.e., the parameter value combinations) related to each pair of training images. That is, regarding each pair of training images j, by using the feature combination $(CR_{j,i}, EPM_{j,i})$, the grouping process is conducted with respect to the parameter space related to each pair of training images.

In an example, the change of two second approaching degrees calculated on the grounds of the parameter value combinations within the preferred parameter value range combination (e.g., the difference between two error pixel mask images calculated based on two neighboring parameter value combinations within the preferred parameter value range combination) may be expressed by a differential rate DR. The differential rate DR may relate to the differences between corresponding pixels in the two error pixel mask images.

In other words, since the correct rate CR is expressed by a value, it is very easy to evaluate the similarity between two correct rates, for example, by calculating the absolute value or the square of the difference between the two correct rates.

However, the error pixel mask images are kinds of images. As such, in order to take account of the distribution information of pixels in each error pixel mask image, it is necessary to define the differential rate DR so as to evaluate the similarity between two error pixel mask images.

The differential rate DR may be expressed by the following equation (4).

$$N_{all} = \left\| \{(x, y) : (x, y) \in EPM_{j,i}\} \right\|$$
$$N_{diff} = \left\| \{(x, y) : (x, y) \in EPM_{j,i}, EPM_{j,i}(x, y) \neq EPM_{j,neigh}(x, y)\} \right\| \quad (4)$$
$$DR = \frac{N_{diff}}{N_{all}}$$

Here, j stands for a pair of training images; DR refers to the differential rate between two error pixel mask images $EPMI_i$ and $EPMI_{neigh}$; i denotes a parameter value combination based on which the error pixel mask image $EPMI_i$ is calculated; $EPMI_{neigh}$ is calculated based on the neighboring parameter value combination of the parameter value combination i; $EPM_{j,i}(x,y)$ refers to the error pixel mask of each pixel at (x,y) in the error pixel mask image $EPMI_i$; $EPM_{j,neigh}(x,y)$ represents the error pixel mask of each pixel at (x,y) in the error pixel mask image $EPMI_{neigh}$; $N_{all}$ is the total number of pixels in the error pixel mask image $EPMI_i$ (or the error pixel mask image $EPMI_{neigh}$); and $N_{diff}$ means the number of pixels whose error pixel masks are different in the two error pixel mask images $EPMI_i$ and $EPMI_{neigh}$.

Here it should be noted that the smaller a differential rate DR between two error pixel masks is, the smaller the change between two second approaching degrees corresponding to the differential rate DR is, i.e., the smaller the difference between the two error pixel masks calculated on the grounds of the related two parameter value combinations.

Of course, the differential rate DR is just an example for evaluating the similarity between two error pixel mask images. That is, those people skilled in the art may also conceive any other means to achieve the same function, for example, only considering $N_{diff}$ in the equation (4) or utilizing the differences between corresponding pixels in the two error pixel mask images, the absolute values of the differences, or the squares of the differences.

Moreover, in an example, the third approaching degree may be the average value or the mid value of the first approaching degrees calculated based on the parameter value combinations within the preferred parameter value range combination. Of course, the present invention is not limited to this; that is, those people skilled in the art may also adopt any other proper means to define the third approaching degree.

In an example, STEP S306 of FIG. 3 may be realized by conducting, on the basis of the feature combination, clustering with respect to the parameter space by using the predetermined thresholds related to the respective features.

In particular, regarding each pair of training images j, after carrying out grouping with respect to the corresponding parameter space, the corresponding parameter value combinations may be clustered into nj classes as follows: $C_{j,k}$, $k=1, 2, ..., n_j$. Here each class has a third correct rate $CR_{j,k}$ which may be the average value or the mid value of the correct rates corresponding to the members in this class, for example.

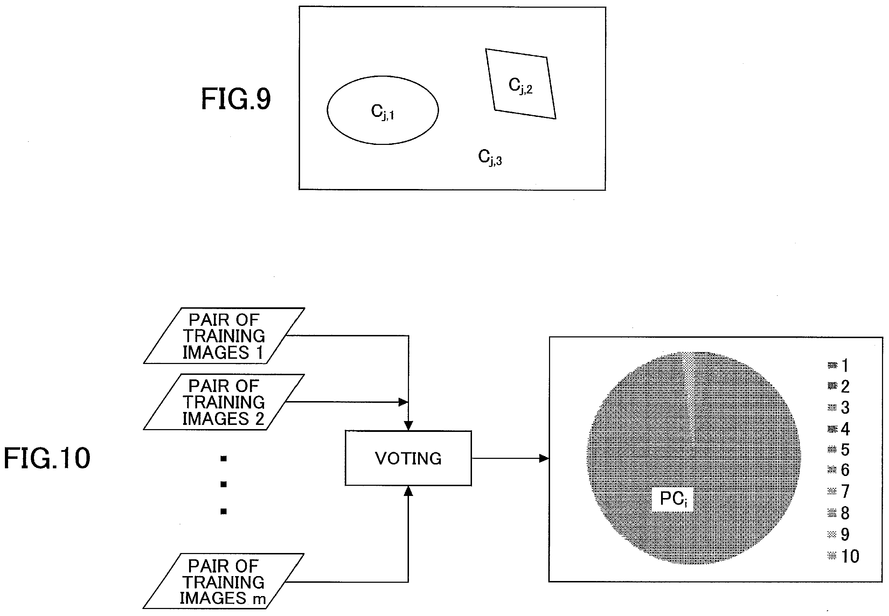

FIG. 9 illustrates a result obtained by carrying out clustering with respect to plural parameter value combinations.

As shown in FIG. 9, the plural parameter value combinations are clustered into three classes, namely, $C_{j,1}$, $C_{j,2}$, and $C_{j,3}$.

Here it should be noted that how to conduct the clustering process is well known to those people skilled in the art. For example, it is possible to adopt a K-means algorithm, a K-medoids algorithm, or a CLARANS (Clustering Large Applications based on RANdomized Search) algorithm. Of course, the present invention is not limited to this; that is, those people skilled in the art may also utilize any other proper means such as region growing for achieving the clustering process.

In this way, by using both the first approaching degrees (e.g., correct rates) and the second approaching degrees (e.g., error pixel mask images) to make up the feature combinations for conducting grouping with respect to the parameter space of the parameter set so as to obtain the preferred parameter value range combination, it is possible to let the first approaching degrees obtained based on the parameter value combinations within the preferred parameter value range combination have relatively large values; and to let the changes of the first approaching degrees and the changes of the second approaching degrees be less than the first and second predetermined thresholds, respectively.

As a result, by obtaining the preferred parameter value range combination so as to get an optimum parameter value combination, it is possible to substitute the optimum parameter value combination for a giving disparity calculation algorithm so as to acquire an optimum disparity calculation algorithm, so that it is possible to utilize the acquired optimum disparity calculation algorithm to conduct disparity calculation with respect to left and right images captured by a two-lens camera so as to obtain a more accurate disparity map.

In addition, as described above, one or more pairs of training images may be utilized. Up to here, a case where there is only one pair of training images has been set forth. In what follows, a case where the number of pairs of training images is more than one will be depicted in detail.

In an example, the method shown in FIG. 3 may further include steps of, in a case there are plural pairs of training images, determining plural value range combinations for voting, corresponding to the preferred parameter value range combinations of the plural pairs of training images; and to, according to majority rule, conduct voting based on the plural value range combinations, so as to select one from the plural value range combinations, which is preferred compared to most of the plural pairs of training images, to serve as a more preferable parameter value range combination of the parameter set.

As described above, when determining the preferred parameter value range combination regarding a single pair of training images, the third approaching degree (e.g., third correct rate) is considered. As such, regarding each pair of training images j, the third correct rate $CR_{j,k}$ of each class (e.g., the average value of the mid value of the correct rates corresponding to each member of this class) obtained by conducting clustering with respect to the parameter value combinations related to the corresponding pair of training images is greater than the third predetermined threshold $\theta$, i.e., $CR_{j,k} > \theta$.

As a result, it is possible to ensure that the first approaching degrees (e.g., correct rates) calculated based on the parameter value combinations within the preferred parameter value range combination regarding the corresponding pair of training images are relatively large.

In a case where there are plural pairs of training images, it is possible to use majority rule to conduct voting with respect to the plural pairs of training images, so as to determine a more preferable parameter value range combination which may be preferable for most of the plural pairs of training images.

FIG. 10 illustrates a result obtained by carrying out voting based on the majority rule with respect to plural pairs of training images.

Here it should be noted that regarding each pair of training images, one or more preferred parameter value range combinations may be obtained. As such, all the obtained preferred parameter value range combinations should be taken into account. That is, the voting process should be conducted with respect to those among all the obtained preferred parameter value range combinations, whose third correct rates are greater than the third predetermined threshold $\theta$, so as to obtain the more preferable parameter value range combination (e.g., $PC_{10}$ in FIG. 10) which may be preferable for most of the plural pairs of training images.

In this way, by acquiring the more preferable parameter value range combination which may be preferable for most of the plural pairs of training images, it is possible to further improve the accuracy, so that it is possible to acquire a more accurate disparity calculation algorithm for getting a more accurate disparity map.

Up to here, the preferred parameter value range combination in a case where there in only one part of training images or the more preferable parameter value range combination in a case where there are plural pairs of training images has been acquired. In addition, it is also possible adopt the following iteration process so as to eventually acquire an optimum parameter value combination (or an optimum parameter value range combination).

In particular, in an example, the method shown in FIG. 3 may further include a step of, by letting the preferred parameter value range combination or the more preferable parameter value range combination be an initial parameter value range combination, conducting a predetermined number of iterations so as to get the optimum parameter value combination (or the optimum parameter value range combination).

In each iteration, the corresponding parameter value range combination and the corresponding search step length may be decided in the light of the result of the previous iteration. In this way, by carrying out a rough-to-fine search process, it is possible to finally get the optimum parameter value combination (or the optimum parameter value range combination).

For example, the initial parameter value ranges of parameters p1 and p2 are [1, N1] and [1, N2], respectively (i.e., the initial parameter value range combination of the parameter set consisting of p1 and p2 is ([1, N1], [1, N2])), and S1 and S2 serve as search step lengths for generating parameter value combinations among the initial parameter value range combination. In this case, if the parameter value range combination obtained in first iteration is ([N1', N1"], [N2', N2"]), then it is possible to utilize search step lengths S1' and S2', which are respectively less than S1 and S2, to generate the parameter value combinations in the next iteration, as shown in the following Table 4. Here q=(N1"-N'/S1')*(N2"-N2'/S2').

Here it should be noted that it is possible to set a predetermined number of iterations or a predetermined parameter value combination related threshold to serve as a stop condition for the iteration process. In this way, by conducting rough-to-fine search, it is possible to eventually get the optimum parameter value combination or the optimum parameter value range combination.

Table 4

| Parameter Value Combination | Parameter | |
|---|---|---|
| | p1 | p2 |
| PC1 | N1' | N2' |
| PC2 | N1'+S1' | N2' |
| ... | ... | ... |
| ... | N1" | N2' |
| ... | N1'+S1' | N2'+S2' |
| ... | ... | ... |
| PCq | N1" | N2" |

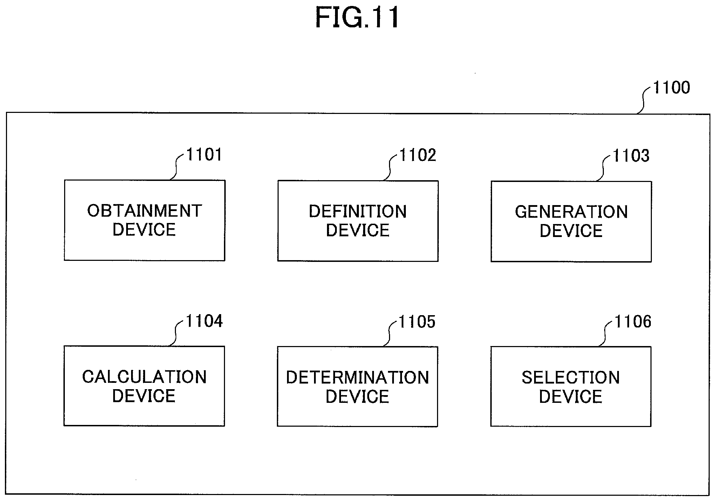

In what follows, a system for selecting an optimum value for each parameter in a parameter set for disparity calculation, according to an embodiment of the present invention will be depicted by referring to FIG. 11.

FIG. 11 is a block diagram of a system 1100 for selecting an optimum value for each parameter of a parameter set for disparity calculation.

As shown in FIG. 11, the system 1100 includes an obtainment device 1101, a definition device 1102, a generation device 1103, a calculation device 1104, a determination device 1105, and a selection device 1106.

The obtainment device 1101 is configured to obtain a pair of training images and a real disparity map (also called a "first disparity map") corresponding to the pair of training images.

The definition device 1102 is configured to define an initial parameter value range for each parameter in the parameter set so as to obtain an initial parameter value range combination.

The generation device 1103 is configured to divide the initial parameter value range of each parameter in the initial parameter value range combination so as to generate parameter value combinations of the parameter set.

The calculation device 1104 is configured to, regarding each of the parameter value combinations, obtain a second disparity map by conducting calculation with respect to the pair of training images by using the corresponding parameter value combination.

The determination device 1105 is configured to, regarding each of the parameter value combinations, determine a whole image based approaching degree (also called a "first approaching degree") and a pixel distribution base approaching degree (also called a "second approaching degree") between the corresponding second disparity map and the first disparity map.

The selection device 1106 is configured to select a preferred parameter value range combination for the parameter set, corresponding to the pair of training images.

Here the selection device 1106 is configured to conduct, based on the first approaching degrees and the second approaching degrees, grouping (i.e., a kind of division) with respect to the parameter value combinations of the parameter set so as to obtain the preferred parameter value range combination for the parameter set, so that the changes of the first approaching degrees determined based on the parameter value combinations within the preferred parameter value range combination are less than a first predetermined threshold; the changes of the second approaching degrees determined based on the parameter value combinations within the preferred parameter value range combination are less than a second predetermined threshold; and an additional whole image based approaching degree (also called a "third approaching degree") related to the first approaching degrees determined based on the parameter value combinations within the preferred parameter value range combination is greater than a third predetermined threshold.

In an example, the system 1100 may further include a device configured, in a case there exit plural pairs of training images, to obtain plural value range combinations for voting, corresponding to the preferred parameter value range combinations of the plural pairs of training images; and to, according to majority rule, conduct voting based on the plural value range combinations, so as to select one from the plural value range combinations, which is preferred compared to most of the plural pairs of training images, to serve as a more preferable parameter value range combination of the parameter set.

In an example, the system 1100 may further include a device configured to conduct, by letting the preferred parameter value range combination (in a case there is only one pair of training images) or the more preferable parameter value range combination (in a case there are plural pairs of training images) be an initial parameter value range combination, a predetermined number of iterations with respect to the initial parameter value range combination so as to acquire an optimum parameter value range combination for the parameter set.

In an example, the first approaching degree may be represented by a correct rate. The correct rate is related to the number of pixels in the corresponding second disparity map, whose disparity values approach the disparity values of the corresponding pixels in the first disparity map. The change of two first approaching degrees calculated based on their corresponding parameter value combinations within the preferred parameter value range combination may be represented by the difference between the two corresponding correct rates. Here the smaller the difference is, the smaller the change is.

In an example, the correct rate may be expressed by the following equation (5).

$$N_g = \left\| \{(x,y) : (x,y) \in R, d_g(x,y) > 0\} \right\|$$

$$N_c = \left\| \{(x,y) : (x,y) \in R, d_g(x,y) > 0, d_c(x,y) > 0, |d_g(x,y) - d_c(x,y)| < \varepsilon\} \right\| \qquad (5)$$

$$CR = \frac{N_c}{N_g}$$

Here, R refers to a pair of training images; (x,y) stands for the coordinates of each pixel in the pair of training images; $d_g$ is the disparity value of the pixel at (x,y) in the first disparity map; $d_c$ represents the disparity value of the pixel at (x,y) in the corresponding second disparity map; $\varepsilon$ denotes a predetermined threshold; Ng is the total number of pixels in any one image consisting of the pair of training images; $N_c$ is the number of pixels, whose disparity values are greater than 0 and whose absolute differences are less than $\varepsilon$, in the first disparity map and the corresponding second disparity map; and CR means the correct rate. Here the larger the correct rate is, the higher the corresponding first approaching degree is.

In an example, the second approaching degree may be represented by an error pixel mask image. The error pixel mask image may indicate whether the disparity value of each pixel in the corresponding second disparity map approaches the disparity value of the corresponding pixel in the first disparity map. The change of two second approaching degrees calculated based on their corresponding parameter value combinations within the preferred parameter value range combination may be represented by a differential rate. The differential rate is related to the differences between pixels in the two corresponding error pixel mask images. Here, the smaller the differential rate is, the smaller the change is.

In an example, the error pixel mask image may be expressed by the following equation (6).

$$EPM(x,y) = \begin{cases} 255 & if & d_g(x,y) > 0, d_c(x,y) = 0 \\ 255 & if \ d_g(x,y) > 0, d_c(x,y) > 0, |d_g(x,y) - d_c(x,y)| \geq \varepsilon \\ 0 & else \end{cases} \qquad (6)$$

Here, x and y are the horizontal and vertical coordinates of each pixel in a pair of training images; dg refers to the disparity value of the pixel at (x,y) in the first disparity map; $d_c$ stands for the disparity value of the pixel at (x,y) in the corresponding second disparity map; $\varepsilon$ denotes a predetermined threshold; and EPM(x,y) represents the error pixel mask at (x,y) in the error pixel mask image.

In an example, the differential rate may be expressed by the following equation (7).

$$N_{all} = \left\| \{(x,y) : (x,y) \in EPM_{j,i}\} \right\|$$

$$N_{diff} = \left\| \{(x,y) : (x,y) \in EPM_{j,i}, EPM_{j,i}(x,y) \neq EPM_{j,neigh}(x,y)\} \right\| \qquad (7)$$

$$DR = \frac{N_{diff}}{N_{all}}$$

Here, j stands for a pair of training images; DR refers to the differential rate between two error pixel mask images $EPMI_i$ and $EPMI_{neigh}$; i denotes a parameter value combination based on which the error pixel mask image $EPMI_i$ is calculated; $EPMI_{neigh}$ is calculated based on the neighboring parameter value combination of the parameter value combination i; $EPM_{j,i}(x,y)$ refers to the error pixel mask of each pixel at (x,y) in the error pixel mask image $EPMI_i$; $EPM_{j,neigh}(x,y)$ represents the error pixel mask of each pixel at (x,y) in the error pixel mask image $EPMI_{neigh}$; $N_{all}$ is the total number of pixels in the error pixel mask image $EPMI_i$ (or the error pixel mask image $EPMI_{neigh}$); and $N_{diff}$ means the number of pixels whose error pixel masks are different in the two error pixel mask images $EPMI_i$ and $EPMI_{neigh}$.

In an example, the third approaching degree may be the average value or the mid value of the first approaching image degrees calculated based on the parameter value combinations within the preferred parameter value range combination.

In an example, the grouping process conducted by the selection device 1106 with respect to the parameter value combinations of the parameter set is realized by carrying out clustering, based on predetermined thresholds for the first approaching degrees and the second approaching degrees, with respect to the parameter value combinations of the parameter set.

Therefore, it is possible to select an optimum value for each parameter of the parameter set from the preferred parameter value range combination, the more preferable parameter value range combination, or the optimum parameter value range combination, so that it is possible to substitute the optimum value of each parameter of the parameter set for a given disparity calculation algorithm so as to acquire an optimum disparity calculation algorithm. As a result, it is possible to utilize the optimum disparity calculation algorithm to conduct disparity calculation with respect to, for example, left and right images captured by a two-lens camera, so as to obtain a more accurate disparity map.

It should be noted that the above respective embodiments are just exemplary ones, and the specific structure and operation of them may not be used for limiting the present invention.

Moreover, the embodiments of the present invention may be implemented in any convenient form, for example, using dedicated hardware or a mixture of dedicated hardware and software. The embodiments of the present invention may be implemented as computer software implemented by one or more networked processing apparatuses. The network may comprise any conventional terrestrial or wireless communications network, such as the Internet. The processing apparatuses may comprise any suitably programmed apparatuses such as a general-purpose computer, a personal digital assistant, a mobile telephone (such as a WAP or 3G-compliant phone) and so on. Since the embodiments of the present invention can be implemented as software, each and every aspect of the present invention thus encompasses computer software implementable on a programmable device.

The computer software may be provided to the programmable device using any storage medium for storing processor-readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

While the present invention is described with reference to the specific embodiments chosen for purpose of illustration, it should be apparent that the present invention is not limited to these embodiments, but numerous modifications could be made thereto by those people skilled in the art without departing from the basic concept and technical scope of the present invention defined in the claims. The present application is based on and claims the benefit of priority of Chinese Patent Application No. 201510156232.0 filed on April 3, 2015, the entire contents of which are hereby incorporated by reference.

**Claims**

1. A method of selecting an optimum value for each parameter of a parameter set for disparity calculation, comprising:

an obtainment step of obtaining a pair of training images and a first disparity map corresponding to the pair of training images;

a definition step of defining an initial parameter value range for each parameter in the parameter set so as to make up an initial parameter value range combination;

a generation step of generating, by dividing the initial parameter value range of each parameter in the initial parameter value range combination, plural parameter value combinations of the parameter set;

a calculation step of, regarding each of the plural parameter value combinations, obtaining a second disparity map by conducting disparity calculation with respect to the pair of training images by using the corresponding parameter value combination;

a determination step of, regarding each of the plural parameter value combinations, determining a first approaching degree and a second approaching degree between the corresponding second disparity map and the first disparity map; and **characterized by**:

a selection step of selecting a preferred parameter value range combination for the parameter set, corresponding to the pair of training images,

wherein,

the selection step includes carrying out, based on the first approaching degrees and the second approaching degrees, a grouping process with respect to the parameter value combinations of the parameter set so as to obtain the preferred parameter value range combination for the parameter set, so that the changes of the first approaching degrees determined based on the parameter value combinations within the preferred parameter value range combination are less than a first predetermined threshold; the changes of the second approaching degrees determined based on the parameter value combinations within the preferred parameter value range combination are less than a second predetermined threshold; and a third approaching degree related to the first approaching degrees determined based on the parameter value combinations within the preferred parameter value range combination is greater than a third predetermined threshold.

2. The method according to claim 1, further comprising:

in a case where there are plural pairs of training images,

acquiring plural value range combinations for voting, corresponding to the preferred parameter value range combinations of the plural pairs of training images; and

according to majority rule, carrying out voting based on the plural value range combinations for voting, so as to select one from the plural value range combinations, which is preferred compared to most of the plural pairs of training images, to serve as a more preferable parameter value range combination of the parameter set.

3. The method according to claim 1 or 2, further comprising:

carrying out, by letting the preferred parameter value range combination or the more preferable parameter value range combination be the initial parameter value range combination, a predetermined number of iterations with respect to the initial parameter value range combination, so as to acquire an optimum parameter value range combination for the parameter set.

4. The method according to any preceding claim, wherein:

each of the first approaching degrees is expressed by a correct rate which is related to a number of pixels in the corresponding second disparity map, whose disparity values approach disparity values of corresponding pixels in the first disparity map; and

a change of two first approaching degrees, which are calculated based on the corresponding parameter value combinations within the preferred parameter value range combination, is expressed by a difference between the corresponding correct rates, and the smaller the difference is, the smaller the change is.

5. The method according to claim 4, wherein:

each of the correct rates is expressed by

$$N_g = \left\| \{(x,y) : (x,y) \in R, d_g(x,y) > 0\} \right\|$$

$$N_c = \left\| \{(x,y) : (x,y) \in R, d_g(x,y) > 0, d_c(x,y) > 0, |d_g(x,y) - d_c(x,y)| < \varepsilon\} \right\| \quad,$$

$$CR = \frac{N_c}{N_g}$$

here, R refers to the pair of training images; (x,y) stands for coordinates of each pixel in the pair of training images; dg is a disparity value of a pixel at (x,y) in the first disparity map; $d_c$ represents a disparity value of a pixel at (x,y) in the corresponding second disparity map; $\varepsilon$ denotes a predetermined threshold; Ng is a total number of pixels in any one of a reference image and a target image consisting of the pair of training images; $N_c$ is a number of pixels, whose disparity values are greater than 0 and whose absolute differences are less than $\varepsilon$, in the first disparity map and the corresponding second disparity map; and CR means the correct rate, and the larger the correct rate is, the higher the corresponding first approaching degree is.

6. The method according to any preceding claim, wherein:

each of the second approaching degrees is expressed by an error pixel mask image which indicates whether a disparity value of each pixel in the corresponding second disparity map approaches a disparity value of the corresponding pixel in the first disparity map; and
a change of two second approaching degrees, which are calculated based on the corresponding parameter value combinations within the preferred parameter value range combination, is expressed by a differential rate which is related to differences between pixels in the corresponding error pixel mask images, and the smaller the differential rate is, the smaller the change is.

7. The method according to claim 6, wherein:

each of the error pixel mask images is expressed by

$$EPM(x,y) = \begin{cases} 255 & if & d_g(x,y) > 0, d_c(x,y) = 0 \\ 255 & if\ d_g(x,y) > 0, d_c(x,y) > 0, |d_g(x,y) - d_c(x,y)| \geq \varepsilon \\ 0 & else \end{cases} \quad,$$

here, x and y are horizontal and vertical coordinates of each pixel in the pair of training images; dg refers to a disparity value of a pixel at (x,y) in the first disparity map; $d_c$ stands for a disparity value of a pixel at (x,y) in the corresponding second disparity map; $\varepsilon$ denotes a predetermined threshold; and EPM(x,y) represents an error pixel mask at (x, y) in the error pixel mask image, and
the differential rate is expressed by

$$N_{all} = \left\| \{(x,y) : (x,y) \in EPM_{j,i}\} \right\|$$

$$N_{diff} = \left\| \{(x,y) : (x,y) \in EPM_{j,i}, EPM_{j,i}(x,y) \neq EPM_{j,neigh}(x,y)\} \right\| \quad,$$

$$DR = \frac{N_{diff}}{N_{all}}$$

here, j stands for the pair of training images; DR refers to the differential rate between the two error pixel mask images EPMI$_i$ and EPMI$_{neigh}$; i denotes a parameter value combination based on which the error pixel mask image EPMI$_i$ is calculated; EPMI$_{neigh}$ is calculated based on the neighboring parameter value combination of the parameter value combination i; $EPM_{j,i}(x,y)$ refers to an error pixel mask of each pixel at (x,y) in the error pixel mask image $EPMI_i$; $EPM_{j,neigh}(x,y)$ represents an error pixel mask of each pixel at (x,y) in the error pixel mask image $EPMI_{neigh}$; $N_{all}$ is a total number of pixels in the error pixel mask image $EPMI_i$ or the error pixel mask image $EPMI_{neigh}$; and $N_{diff}$ means a number of pixels whose error pixel masks are different in the two error pixel mask images $EPMI_i$ and $EPMI_{neigh}$.

8. The method according to any preceding claim, wherein:

the third approaching degree is an average or mid value of the first approaching image degrees calculated based on the parameter value combinations within the preferred parameter value range combination.

9. The method according to any preceding claim, wherein:

the grouping process carried out by the selection step with respect to the plural parameter value combinations of the parameter set is realized by conducting a clustering process, based on predetermined thresholds for the first approaching degrees and the second approaching degrees, with respect to the plural parameter value combinations of the parameter set.

10. A system for selecting an optimum value for each parameter of a parameter set for disparity calculation, comprising:

an obtainment device configured to obtain a pair of training images and a first disparity map corresponding to the pair of training images;
a definition device configured to define an initial parameter value range for each parameter in the parameter set so as to make up an initial parameter value range combination;
a generation device configured to generate, by dividing the initial parameter value range of each parameter in the initial parameter value range combination, plural parameter value combinations of the parameter set;
a calculation device configured to, regarding each of the plural parameter value combinations, obtain a second disparity map by conducting disparity calculation with respect to the pair of training images by using the corresponding parameter value combination;
a determination device configured to, regarding each of the plural parameter value combinations, determine a first approaching degree and a second approaching degree between the corresponding second disparity map and the first disparity map; and **characterized by**:

a selection device configured to select a preferred parameter value range combination for the parameter set, corresponding to the pair of training images,
wherein,
the selection device is configured to conduct a step of carrying out, based on the first approaching degrees and the second approaching degrees, a grouping process with respect to the parameter value combinations of the parameter set so as to obtain the preferred parameter value range combination for the parameter set, so that the changes of the first approaching degrees determined based on the parameter value combinations within the preferred parameter value range combination are less than a first predetermined threshold; the changes of the second approaching degrees determined based on the parameter value combinations within the preferred parameter value range combination are less than a second predetermined threshold; and a third approaching degree related to the first approaching degrees determined based on the parameter value combinations within the preferred parameter value range combination is greater than a third predetermined threshold.

11. A computer-executable program for causing a computer to carry out the method according to any of claims 1 to 9.

12. A non-transitory computer-readable medium having a computer-executable program of instructions for execution by a processing system, the computer-executable program, when executed, causing the processing system to carry out the method according to any of claims 1 to 9.

**Patentansprüche**

1. Verfahren des Auswählens eines optimalen Werts für jeden Parameter eines Parametersatzes zur Disparitätsberechnung, umfassend:

einen Erhaltungsschritt des Erhaltens eines Paars von Trainingsbildern und einer ersten Disparitätskarte in Übereinstimmung mit dem Paar von Trainingsbildern;

einen Definitionsschritt des Definierens eines anfänglichen Parameterwertbereichs für jeden Parameter im Parametersatz, um eine anfängliche Parameterwertbereichskombination zu bilden;

einen Erzeugungsschritt des Erzeugens von mehrfachen Parameterwertkombinationen des Parametersatzes durch das Aufteilen des anfänglichen Parameterwertbereichs jedes Parameters in der anfänglichen Parameterwertbereichskombination;

einen Berechnungsschritt des Erhaltens in Bezug auf jede der mehrfachen Parameterwertkombinationen einer zweiten Disparitätskarte durch das Durchführen einer Disparitätsberechnung in Bezug auf das Paar von Trainingsbildern unter Verwendung der entsprechenden Parameterwertkombination;

einen Bestimmungsschritt des Bestimmens in Bezug auf jede der mehrfachen Parameterwertkombinationen eines ersten Grads des Herannahens und eines zweiten Grads des Herannahens zwischen der entsprechenden zweiten Disparitätskarte und der ersten Disparitätskarte; und

**gekennzeichnet durch**:

einen Auswahlschritt des Auswählens einer bevorzugten Parameterwertbereichskombination für den Parametersatz in Übereinstimmung mit dem Paar von Trainingsbildern,
wobei
der Auswahlschritt das Ausführen, beruhend auf den ersten Graden des Herannahens und den zweiten Graden des Herannahens, eines Gruppierungsverfahrens in Bezug auf die Parameterwertkombinationen des Parametersatzes umfasst, um die bevorzugte Parameterwertbereichskombination für den Parametersatz zu erhalten, sodass die Veränderungen der ersten Grade des Herannahens, bestimmt beruhend auf den Parameterwertkombinationen in der bevorzugten Parameterwertbereichskombination, geringer sind als ein erster festgelegter Schwellenwert;
die Änderungen der zweiten Grade des Herannahens, bestimmt beruhend auf den Parameterwertkombinationen in der bevorzugten Parameterwertbereichskombination, geringer sind als ein zweiter festgelegter Schwellenwert; und ein dritter Grad des Herannahens in Verbindung mit den ersten Graden des Herannahens, bestimmt beruhend auf den Parameterwertkombinationen in der bevorzugten Parameterwertbereichskombination, höher ist als ein dritter festgelegter Schwellenwert.

2. Verfahren nach Anspruch 1, ferner umfassend:

in einem Fall, in dem mehrfache Paare von Trainingsbildern vorhanden sind,
Erlangen mehrfacher Wertbereichskombinationen für eine Abstimmung in Übereinstimmung mit den bevorzugten Parameterwertbereichskombinationen der mehrfachen Paare von Trainingsbildern; und
in Übereinstimmung mit dem Mehrheitsprinzip, Ausführen einer Abstimmung beruhend auf den mehrfachen Wertbereichskombinationen für die Abstimmung, um eine aus den mehrfachen Wertbereichskombinationen auszuwählen, die im Vergleich zu den meisten der mehrfachen Paare von Trainingsbildern bevorzugt ist, um als eine bevorzugtere Parameterwertbereichskombination des Parametersatzes zu dienen.

3. Verfahren nach Anspruch 1 oder 2, ferner umfassend:

Ausführen durch das Zulassen, dass die bevorzugte Parameterwertbereichskombination oder die bevorzugtere Parameterwertbereichskombination die anfängliche Parameterwertbereichskombination ist, einer festgelegten Anzahl von Durchläufen in Bezug auf die anfängliche Parameterwertbereichskombination, um eine optimale Parameterwertbereichskombination für den Parametersatz zu erlangen.

4. Verfahren nach einem der vorstehenden Ansprüche, wobei:

jeder der ersten Grade des Herannahens ausgedrückt wird durch eine korrekte Rate, die mit einer Anzahl von Pixeln in der entsprechenden zweiten Disparitätskarte in Verbindung steht, deren Disparitätswerte sich Disparitätswerten von entsprechenden Pixeln in der ersten Disparitätskarte annähern; und
eine Veränderung der ersten Grade des Herannahens, die berechnet werden beruhend auf den entsprechenden Parameterwertkombinationen in der bevorzugten Parameterwertbereichskombination, ausgedrückt wird durch einen Unterschied zwischen den entsprechenden korrekten Raten, und wobei je geringer der Unterschied, desto geringer die Veränderung.

5. Verfahren nach Anspruch 4, wobei:

jede der korrekten Raten ausgedrückt wird durch

$$N_g = \|\{(x, y) : (x, y) \in R, d_g(x, y) > 0\}\|$$

$$N_c = \|\{(x, y) : (x, y) \in R, d_g(x, y) > 0, d_c(x, y) > 0, |d_g(x, y) - d_c(x, y)| < \varepsilon\}\|,$$

$$CR = \frac{N_c}{N_g}$$

wobei sich R auf das Paar von Trainingsbildern bezieht; (x, y) für Koordinaten jedes Pixels im Paar von Trainingsbildern steht; dg ein Disparitätswert eines Pixels bei (x, y) in der ersten Disparitätskarte ist; $d_c$ einen Disparitätswert eines Pixels bei (x, y) in der entsprechenden zweiten Disparitätskarte darstellt; ε einen festgelegten Schwellenwert darstellt; Ng eine Gesamtanzahl von Pixeln in einem eines Bezugsbildes und eines Zielbildes, bestehend aus dem Paar von Trainingsbildern, ist; $N_c$ eine Anzahl von Pixeln deren Disparitätswerte größer sind als 0 und deren absolute Unterschiede geringer sind als ε, in der ersten Disparitätskarte und der entsprechenden zweiten Disparitätskarte ist; und CR die korrekte Rate bedeutet, und je größer die korrekte Rate, desto höher der entsprechende erste Grad des Herannahens.

6. Verfahren nach einem der vorstehenden Ansprüche, wobei:

jeder der zweiten Grade des Herannahens ausgedrückt wird durch ein Fehlerpixel-Maskenbild, das anzeigt, ob ein Disparitätswert jedes Pixels in der entsprechenden zweiten Disparitätskarte sich einem Disparitätswert des entsprechenden Pixels in der ersten Disparitätskarte annähert; und
eine Veränderung von zwei zweiten Graden des Herannahens, die berechnet werden beruhend auf den entsprechenden Parameterwertkombinationen in der bevorzugten Parameterwertbereichskombination, ausgedrückt wird durch eine Differentialrate, die in Verbindung steht mit Unterschieden zwischen Pixeln in den entsprechenden Fehlerpixel-Maskenbildern, und wobei je geringer die Differentialrate, desto geringer die Veränderung.

7. Verfahren nach Anspruch 6, wobei:

jedes der Fehlerpixel-Maskenbilder ausgedrückt wird durch

$$EPM(x, y) = \begin{cases} 255 & if & d_g(x, y) > 0, d_c(x, y) = 0 \\ 255 & if\ d_g(x, y) > 0, d_c(x, y) > 0, |d_g(x, y) - d_c(x, y)| \geq \varepsilon \\ 0 & else \end{cases},$$

wobei x und y horizontale und vertikale Koordinaten jedes Pixels im Paar von Trainingsbildern sind; dg sich auf einen Disparitätswert eines Pixels bei (x, y) in der ersten Disparitätskarte bezieht; $d_c$ für einen Disparitätswert eines Pixels bei (x, y) in der entsprechenden zweiten Disparitätskarte steht; ε einen festgelegten Schwellenwert darstellt; und EPM(x, y) eine Fehlerpixelmaske bei (x, y) im Fehlerpixel-Maskenbild darstellt, und die Differentialrate ausgedrückt wird durch

$$N_{all} = \|\{(x, y) : (x, y) \in EPM_{j,i}\}\|$$

$$N_{diff} = \|\{(x, y) : (x, y) \in EPM_{j,i}, EPM_{j,i}(x, y) \neq EPM_{j,neigh}(x, y)\}\|,$$

$$DR = \frac{N_{diff}}{N_{all}}$$

wobei j für das Paar von Trainingsbildern steht; DR sich auf die Differentialrate zwischen den beiden Fehlerpixel-Maskenbildern $EPMI_i$ und $EPMI_{neigh}$ bezieht; i eine Parameterwertkombination darstellt, beruhend auf der das Fehlerpixel-Maskenbild $EPMI_i$ berechnet wird; $EPMI_{neigh}$ berechnet wird beruhend auf der angrenzenden Parameterwertkombination der Parameterwertkombination i; $EPM_{j,i}$ (x, y) sich auf eine Fehlerpixelmaske jedes Pixels bei (x, y) im Fehlerpixel-Maskenbild $EPMI_i$ bezieht, $EPM_{j,neigh}$ (x, y) eine Fehlerpixelmaske jedes Pixels bei (x, y) im Fehlerpixel-Maskenbild $EPMI_{neigh}$ darstellt; $N_{all}$ eine Gesamtanzahl von Pixeln im Fehlerpixel-Maskenbild $EPMI_i$ oder dem Fehlerpixel-Maskenbild $EPMI_{neigh}$ darstellt; und $N_{diff}$ eine Anzahl von Pixeln bedeutet, deren Fehlerpixelmasken in den beiden Fehlerpixel-Maskenbildern $EPMI_i$ und $EPMI_{neigh}$ unterschiedlich sind.

8. Verfahren nach einem der vorstehenden Ansprüche, wobei:

   das dritte Grad des Herannahens ein durchschnittlicher oder mittlerer Wert der ersten Bildgrade des Herannahens ist, berechnet beruhend auf den Parameterwertkombinationen in der bevorzugten Parameterwertbereichskombination.

9. Verfahren nach einem der vorstehenden Ansprüche, wobei:

   das durch den Auswahlschritt ausgeführte Gruppierungsverfahren in Bezug auf die mehrfachen Parameterwertkombinationen des Parametersatzes durchgeführt wird durch das Ausführen eines Clusterverfahrens, beruhend auf festgelegten Schwellenwerten für die ersten Grade des Herannahens und die zweiten Grade des Herannahens, in Bezug auf die mehrfachen Parameterwertkombinationen des Parametersatzes.

10. System für das Auswählen eines optimalen Werts für jeden Parameter eines Parametersatzes für eine Disparitätsberechnung, umfassend:

    eine Erhaltungsvorrichtung, konfiguriert, ein Paar von Trainingsbildern und eine erste Disparitätskarte in Übereinstimmung mit dem Paar von Trainingsbildern zu erhalten;
    eine Definitionsvorrichtung, konfiguriert, einen anfänglichen Parameterwertbereich für jeden Parameter im Parametersatz zu definieren, um eine anfängliche Parameterwertbereichskombination zu bilden;
    eine Erzeugungsvorrichtung, konfiguriert, durch das Aufteilen des anfänglichen Parameterwertbereichs jedes Parameters in der anfänglichen Parameterwertbereichskombination mehrfache Parameterwertkombinationen des Parametersatzes zu erzeugen;
    eine Berechnungsvorrichtung, konfiguriert, in Bezug auf jede der mehrfachen Parameterwertkombinationen eine zweite Disparitätskarte durch das Durchführen einer Disparitätsberechnung in Bezug auf das Paar von Trainingsbildern unter Verwendung der entsprechenden Parameterwertkombination zu erhalten;
    eine Bestimmungsvorrichtung, konfiguriert, in Bezug auf jede der mehrfachen Parameterwertkombinationen einen ersten Grad des Herannahens und einen zweiten Grad des Herannahens zwischen der entsprechenden zweiten Disparitätskarte und der ersten Disparitätskarte zu bestimmen; und
    **gekennzeichnet durch**:

    eine Auswahlvorrichtung, konfiguriert, eine bevorzugte Parameterwertbereichskombination für den Parametersatz in Übereinstimmung mit dem Paar von Trainingsbildern auszuwählen,
    wobei
    die Auswahlvorrichtung konfiguriert ist, einen Schritt des Ausführens, beruhend auf den ersten Graden des Herannahens und den zweiten Graden des Herannahens, eines Gruppierungsverfahrens in Bezug auf die Parameterwertkombinationen des Parametersatzes durchzuführen, um die bevorzugte Parameterwertbereichskombination für den Parametersatz zu erhalten, sodass die Veränderungen der ersten Grade des Herannahens, bestimmt beruhend auf den Parameterwertkombinationen in der bevorzugten Parameterwertbereichskombination, geringer sind als ein erster festgelegter Schwellenwert; die Veränderungen der zweiten Grade des Herannahens, bestimmt beruhend auf der Parameterwertkombinationen in der bevorzugten Parameterwertbereichskombination, geringer sind als ein zweiter festgelegter Schwellenwert; und ein dritter Grad des Herannahens in Verbindung mit den ersten Graden des Herannahens, bestimmt beruhend auf den Parameterwertkombinationen in der bevorzugten Parameterwertbereichskombination, höher ist als ein dritter festgelegter Schwellenwert.

11. Computerausführbares Programm zum Veranlassen, dass ein Computer das Verfahren nach einem der Ansprüche 1 bis 9 ausführt.

**12.** Nicht-transitorisches, computerlesbares Medium mit einem computerausführbaren Programm von Anweisungen für die Ausführung durch ein Verarbeitungssystem, wobei das computerausführbare Programm, wenn es ausgeführt wird, bewirkt, dass das Verarbeitungssystem das Verfahren nach einem der Ansprüche 1 bis 9 ausführt.

**Revendications**

**1.** Procédé de sélection d'une valeur optimale pour chaque paramètre d'un ensemble de paramètres de calcul de disparité, comprenant :

une étape d'obtention consistant à obtenir une paire d'images d'apprentissage et une première carte de disparité correspondant à la paire d'images d'apprentissage ;
une étape de définition consistant à définir une plage de valeurs de paramètres initiale pour chaque paramètre de l'ensemble de paramètres afin de réaliser une combinaison de plages de valeurs de paramètres initiales ;
une étape de génération consistant à générer, en divisant la plage de valeurs de paramètres initiale de chaque paramètre en la combinaison de plages de valeurs de paramètres initiales, plusieurs combinaisons de valeurs de paramètres de l'ensemble de paramètres ;
une étape de calcul consistant à, en ce qui concerne chaque combinaison de la pluralité de combinaisons de valeurs de paramètres, obtenir une seconde carte de disparité en effectuant un calcul de disparité à l'égard de la paire d'images d'apprentissage en faisant appel à la combinaison de valeurs de paramètres correspondante ;
une étape de détermination consistant à, en ce qui concerne chaque combinaison de la pluralité de combinaisons de valeurs de paramètres, déterminer un premier degré de rapprochement et un deuxième degré de rapprochement entre la seconde carte de disparité correspondante et la première carte de disparité ; et
**caractérisé par** :

une étape de sélection consistant à sélectionner une combinaison de plages de valeurs de paramètres préférée pour l'ensemble de paramètres, correspondant à la paire d'images d'apprentissage ;
dans lequel,
l'étape de sélection inclut l'étape consistant à mettre en oeuvre, sur la base des premiers degrés de rapprochement et des deuxièmes degrés de rapprochement, un processus de groupement à l'égard des combinaisons de valeurs de paramètres de l'ensemble de paramètres, afin d'obtenir la combinaison de plages de valeurs de paramètres préférée pour l'ensemble de paramètres, de sorte que les modifications des premiers degrés de rapprochement déterminés sur la base des combinaisons de valeurs de paramètres au sein de la combinaison de plages de valeurs de paramètres préférée sont inférieures à un premier seuil prédéterminé ; et de sorte que les modifications des deuxièmes degrés de rapprochement déterminés sur la base des combinaisons de valeurs de paramètres au sein de la combinaison de plages de valeurs de paramètres préférée sont inférieures à un deuxième seuil prédéterminé ; et qu'un troisième degré de rapprochement connexe aux premiers degrés de rapprochement déterminés sur la base des combinaisons de valeurs de paramètres au sein de la combinaison de plages de valeurs de paramètres préférée est supérieur à un troisième seuil prédéterminé.

**2.** Procédé selon la revendication 1, comprenant en outre les étapes ci-dessous consistant à :

dans un cas où il existe plusieurs paires d'images d'apprentissage :

acquérir plusieurs combinaisons de plages de valeurs à soumettre à un vote, correspondant aux combinaisons de plages de valeurs de paramètres préférées de la pluralité de paires d'images d'apprentissage ; et selon une règle majoritaire, mettre en oeuvre le vote sur la base de la pluralité de combinaisons de plages de valeurs à soumettre au vote, afin de sélectionner une combinaison de la pluralité de combinaisons de plages de valeurs, laquelle est préférée par rapport à la plupart des multiples paires d'images d'apprentissage, destinée à servir de combinaison de plages de valeurs de paramètres davantage préférée de l'ensemble de paramètres.

**3.** Procédé selon la revendication 1 ou 2, comprenant en outre les étapes ci-dessous consistant à :

mettre en oeuvre, en laissant la combinaison de plages de valeurs de paramètres préférée, ou la combinaison de plages de valeurs de paramètres davantage préférée, être la combinaison de plages de valeurs de paramètres initiales, un nombre d'itérations prédéterminé relativement à la combinaison de plages de valeurs de paramètres initiales, afin d'acquérir une combinaison de plages de valeurs de paramètres optimale pour l'ensemble de paramètres.

**4.** Procédé selon l'une quelconque des revendications précédentes, dans lequel :

chacun des premiers degrés de rapprochement est exprimé par un rapport correct qui est connexe à un nombre de pixels dans la seconde carte de disparité correspondante, lesquelles valeurs de disparité se rapprochent de valeurs de disparité de pixels correspondants dans la première carte de disparité ; et

une modification de deux premiers degrés de rapprochement, qui sont calculés sur la base des combinaisons de valeurs de paramètres correspondantes au sein de la combinaison de plages de valeurs de paramètres préférée, est exprimée par une différence entre les rapports corrects correspondants, et plus la différence est faible, plus la modification est faible.

**5.** Procédé selon la revendication 4, dans lequel :

chacun des rapports corrects est exprimé par

$$N_g = \|\{(x,\ y) : (x,\ y) \in R, d_g\ (x,\ y) > 0\}\|$$

$$N_c = \|\ \{(x,\ y) : (x,\ y) \in R, d_g\ (x,\ y) > 0, d_c\ (x,\ y) > 0, 1\ d_g\ (x,\ y) - d_c\ (x,\ y) < \varepsilon\}\|,$$

$$CR = \frac{N_c}{N_g}$$

ici, « R » fait référence à la paire d'images d'apprentissage ; « (x, y) » désigne les coordonnées de chaque pixel dans la paire d'images d'apprentissage ; « $d_g$ » est une valeur de disparité d'un pixel au niveau des coordonnées (x, y) dans la première carte de disparité ; « $d_c$ » représente une valeur de disparité d'un pixel au niveau des coordonnées (x, y) dans la seconde carte de disparité correspondante ; « $\varepsilon$ » désigne un seuil prédéterminé ; « Ng » est un nombre total de pixels dans l'une quelconque parmi une image de référence et une image cible constituées par la paire d'images d'apprentissage ; « $N_c$ » est un nombre de pixels dont les valeurs de disparité sont supérieures à « 0 », et dont les différences absolues sont inférieures à « $\varepsilon$ », dans la première carte de disparité et la seconde carte de disparité correspondante ; et « CR » désigne le rapport correct ; et

dans lequel plus le rapport correct est élevé, plus le premier degré de rapprochement correspondant est élevé.

**6.** Procédé selon l'une quelconque des revendications précédentes, dans lequel :

chacun des deuxièmes degrés de rapprochement est exprimé par une image de masque de pixel d'erreur qui indique si une valeur de disparité de chaque pixel dans la seconde carte de disparité correspondante se rapproche d'une valeur de disparité du pixel correspondant dans la première carte de disparité ; et

une modification de deux deuxièmes degrés de rapprochement, qui sont calculés sur la base des combinaisons de valeurs de paramètres correspondantes au sein de la combinaison de plages de valeurs de paramètres préférée, est exprimée par un taux différentiel qui est connexe aux différences entre des pixels dans les images de masque de pixel d'erreur correspondantes, et dans lequel, plus le taux différentiel est faible, plus la modification est faible.

**7.** Procédé selon la revendication 6, dans lequel :

chacune des images de masque de pixel d'erreur est exprimée par :

$$EPM(x,y) = \begin{cases} 255 & if & d_g(x,y) > 0, d_c(x,y) = 0 \\ 255 & if \; d_g(x,y) > 0, d_c(x,y) > 0, |d_g(x,y) - d_c(x,y)| \geq \varepsilon \\ 0 & else \end{cases} ,$$

[if = si, else = autrement]

ici, « x » et « y » sont les coordonnées horizontales et verticales de chaque pixel dans la paire d'images d'apprentissage ; « $d_g$ » fait référence à une valeur de disparité d'un pixel au niveau des coordonnées (x, y) dans la première carte de disparité ; « $d_c$ » désigne une valeur de disparité d'un pixel au niveau des coordonnées (x, y) dans la seconde carte de disparité correspondante ; « e » désigne un seuil prédéterminé ; et « EPM(x, y) » représente un masque de pixel d'erreur au niveau des coordonnées (x, y) dans l'image de masque de pixel d'erreur ; et

le taux différentiel est exprimé par :

$$N_{all} = \|\{(x, y) : (x, y) \in EMP_{j,i}\}\|$$

$$N_{diff} = \|\{(x, y) : (x, y) \in EMP_{j,i}, EMP_{j,i}(x, y) \# EMP_{j \, neigh}(x, y)\}\|,$$

$$DR = \frac{N_{diff}}{N_{all}}$$

ici, «j » désigne la paire d'images d'apprentissage ; « DR » fait référence au taux différentiel entre les deux images de masque de pixel d'erreur $EMPI_i$; et $EMPI_{neigh}$ ; « i » désigne une combinaison de valeurs de paramètres sur la base desquelles est calculée l'image de masque de pixel d'erreur $EPMI_i$ ; $EPMI_{neigh}$ est calculée sur la base de la combinaison de valeurs de paramètres voisine de la combinaison de valeurs de paramètres « i » ; $EMP_{j,i}(x, y)$ fait référence à un masque de pixel d'erreur de chaque pixel au niveau des coordonnées (x, y) dans l'image de masque de pixel d'erreur $EPMI_i$ ; $EMP_{j,neigh}(x, y)$ représente un masque de pixel d'erreur de chaque pixel au niveau des coordonnées (x, y) dans l'image de masque de pixel d'erreur $EPMI_{neigh}$ ; « $N_{all}$ » est un nombre total de pixels dans l'image de masque de pixel d'erreur $EPMI_i$ ou dans l'image de masque de pixel d'erreur $EPMI_{neigh}$ ; et « $N_{diff}$ » désigne un nombre de pixels dont les masques de pixels d'erreur sont différents dans les deux images de masque de pixel d'erreur $EPMI_i$ et $EPMI_{neigh}$.

**8.** Procédé selon l'une quelconque des revendications précédentes, dans lequel :

le troisième degré de rapprochement est une valeur médiane ou moyenne des premiers degrés d'images de rapprochement calculés sur la base des combinaisons de valeurs de paramètres au sein de la combinaison de plages de valeurs de paramètres préférée.

**9.** Procédé selon l'une quelconque des revendications précédentes, dans lequel :

le processus de groupement mis en oeuvre par l'étape de sélection à l'égard de la pluralité de combinaisons de valeurs de paramètres de l'ensemble de paramètres est réalisé en effectuant un processus de regroupement, sur la base de seuils prédéterminés pour les premiers degrés de rapprochement et les deuxièmes degrés de rapprochement, relativement à la pluralité de combinaisons de valeurs de paramètres de l'ensemble de paramètres.

**10.** Système destiné à sélectionner une valeur optimale pour chaque paramètre d'un ensemble de paramètres de calcul de disparité, comprenant :

un dispositif d'obtention configuré de manière à obtenir une paire d'images d'apprentissage et une première carte de disparité correspondant à la paire d'images d'apprentissage ;
un dispositif de définition configuré de manière à définir une plage de valeurs de paramètres initiale pour chaque paramètre de l'ensemble de paramètres afin de réaliser une combinaison de plages de valeurs de paramètres initiales ;

un dispositif de génération configuré de manière à générer, en divisant la plage de valeurs de paramètres initiale de chaque paramètre en la combinaison de plages de valeurs de paramètres initiales, plusieurs combinaisons de valeurs de paramètres de l'ensemble de paramètres ;

un dispositif de calcul configuré de manière à, en ce qui concerne chaque combinaison de la pluralité de combinaisons de valeurs de paramètres, obtenir une seconde carte de disparité en effectuant un calcul de disparité à l'égard de la paire d'images d'apprentissage en faisant appel à la combinaison de valeurs de paramètres correspondante ;

un dispositif de détermination configuré de manière à, en ce qui concerne chaque combinaison de la pluralité de combinaisons de valeurs de paramètres, déterminer un premier degré de rapprochement et un deuxième degré de rapprochement entre la seconde carte de disparité correspondante et la première carte de disparité ; et **caractérisé par** :

un dispositif de sélection configuré de manière à sélectionner une combinaison de plages de valeurs de paramètres préférée pour l'ensemble de paramètres, correspondant à la paire d'images d'apprentissage ; dans lequel,

le dispositif de sélection est configuré de manière exécuter une étape consistant à mettre en oeuvre, sur la base des premiers degrés de rapprochement et des deuxièmes degrés de rapprochement, un processus de groupement à l'égard des combinaisons de valeurs de paramètres de l'ensemble de paramètres, afin d'obtenir la combinaison de plages de valeurs de paramètres préférée pour l'ensemble de paramètres, de sorte que les modifications des premiers degrés de rapprochement déterminés sur la base des combinaisons de valeurs de paramètres au sein de la combinaison de plages de valeurs de paramètres préférée sont inférieures à un premier seuil prédéterminé ; et de sorte que les modifications des deuxièmes degrés de rapprochement déterminés sur la base des combinaisons de valeurs de paramètres au sein de la combinaison de plages de valeurs de paramètres préférée sont inférieures à un deuxième seuil prédéterminé ; et qu'un troisième degré de rapprochement connexe aux premiers degrés de rapprochement déterminés sur la base des combinaisons de valeurs de paramètres au sein de la combinaison de plages de valeurs de paramètres préférée est supérieur à un troisième seuil prédéterminé.

**11.** Programme exécutable par ordinateur pour amener un ordinateur à mettre en oeuvre le procédé selon l'une quelconque des revendications 1 à 9.

**12.** Support lisible par ordinateur non transitoire présentant un programme d'instructions exécutable par ordinateur destiné à être exécuté par un système de traitement, le programme exécutable par ordinateur, lorsqu'il est exécuté, amenant le système de traitement à mettre en oeuvre le procédé selon l'une quelconque des revendications 1 à 9.

# FIG.1

FIG.2

# FIG.3

300

OBTAIN PAIR OF TRAINING IMAGES AND
ITS CORRESPONDING FIRST DISPARITY MAP — S301

DEFINE INITIAL VALUE RANGE FOR EACH
PARAMETER IN PARAMETER SET — S302

DIVIDE EACH INITIAL VALUE RANGE
TO GENERATE PARAMETER VALUE
COMBINATIONS FOR PARAMETER SET — S303

USE PARAMETER VALUE COMBINATIONS
TO PERFORM DISPARITY CALCULATION
ON PAIR OF TRAINING IMAGES SO AS
TO OBTAIN SECOND DISPARITY MAPS — S304

REGARDING EACH PARAMETER VALUE
COMBINATION, DETERMINE FIRST AND
SECOND APPROACHING DEGREES BETWEEN
FIRST DISPARITY MAP AND CORRESPONDING
SECOND DISPARITY MAP — S305

SELECT PREFERRED PARAMETER VALUE
RANGE COMBINATION FOR PARAMETER SET — S306

## FIG.4A

## FIG.4B

## FIG.5

CORRECT RATE

CR=0.604

# FIG.6

(a)                                                                (b)

EP 3 076 370 B1

EP 3 076 370 B1

FIG.7

FIG.8

SMALL DIFFERENCE

(b)

(a)

BIG DIFFERENCE

(c)

EP 3 076 370 B1

FIG.9

FIG.10

# FIG.11

EP 3 076 370 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8098276 B2

- CN 201510156232

**Non-patent literature cited in the description**

- **D. SCHARSTEIN ; R. SZELISKI.** A taxonomy and evaluation of dense two-frame stereo correspondence algorithm. *International Journal of Computer Vision (IJVC),* 2002, vol. 47 (1-3), 7-42
- **A. F. BOBICK ; S. S. INTILLE.** Large Occlusion Stereo. *International Journal of Computer Vision (IJVC),* 1999, vol. 33 (3), 181-200
- **H. HIRSCHMULLER.** Accurate and Efficient Stereo Processing by Semi-global matching and Mutual Information. *Proc. IEEE Int. Conf., Computer Vision Pattern Recognition (CVPR),* 2005, vol. 2, 807-814

- **KORDELAS et al.** Enhanced Disparity Estimation in Stereo Images. *Image and Vision Computing,* 2015, vol. 35, 31-49
- **ZHANG et al.** A New Profile Shape Matching Stereovision Algorithm for Real-Time Human Pose and Hand Gesture Recognition. *International Journal of Advanced Robotic Systems,* 2014, vol. 11 (2), 1-12
- Learning to Detect Ground Control Points for Improving the Accuracy of Stereo Matching. *CVPR, 2014 IEEE Conference,* 2014